# EUROPEAN PATENT APPLICATION

(11) **EP 3 395 586 A1**
(43) Date of publication of application: **31.10.2018**
(21) Application number: 16878658.0
(22) Date of filing: 20.12.2016
(51) Int. Cl.: B60B 9/04, B60B 23/10, B60C 7/00, B60C 7/24

(54) **NON-PNEUMATIC TIRE**

(30) Priority: 21.12.2015 JP 2015248961
(71) Applicant: Bridgestone Corporation, Tokyo 104-8340 (JP)
(72) Inventor: ABE Akihiko, Tokyo 104-8340 (JP); NISHIDA Masashi, Tokyo 104-8340 (JP)
(74) Representative: Oxley, Robin John George
(86) International application number: PCT/JP2016/087866
(87) International publication number: WO 2017/110769

(57) **Abstract**

The present invention provides a non-pneumatic tire that includes an attachment body (11) that is attached to a vehicle axle, a ring member including an inner cylinder (12) that is externally mounted on the attachment body (11) and an outer cylinder that surrounds the inner cylinder (12) from the outside in a tire radial direction, and a plurality of connecting members (15) that are arranged between the inner cylinder (12) and the outer cylinder in a tire circumferential direction and connect the cylinders to each other in a freely displaceable manner, wherein, between an outer circumferential surface (21) of the attachment body (11) and an inner circumferential surface (22) of the inner cylinder (12), a pressing member (20) that presses the attachment body (11) and the inner cylinder (12) in a direction in which they are separated from each other in the tire radial direction is provided.

## Description

### [Technical Field]

The present invention relates to a non-pneumatic tire of which the inside does not need to be filled with pressurized air for use.

Priority is claimed on Japanese Patent Application No. 2015-248961, filed December 21, 2015, the content of which is incorporated herein by reference.

### [Background Art]

In the related art, for example, a non-pneumatic tire described in the following Patent Literature 1 is known.

The non-pneumatic tire includes an attachment body that is attached to a vehicle axle, a ring member including an inner cylinder that is externally mounted on the attachment body and an outer cylinder that surrounds the inner cylinder from the outside in a tire radial direction, a plurality of connecting members that are arranged between the inner cylinder and the outer cylinder in a tire circumferential direction and connect the cylinders to each other in a freely displaceable manner, and a cylindrical tread member that is externally mounted on the outer cylinder.

### [Citation List]

### [Patent Document]

### [Patent Document 1]

Japanese Unexamined Patent Application, First Publication No. 2013-86712

### [Summary of Invention]

### [Technical Problem]

However, in the non-pneumatic tire of the related art, there is room for improvement, when the attachment body and the inner cylinder are fitted, in making the fitting of these members easier, and in improving the ease of assembly and reducing looseness occurring between these members after the assembly.

The present invention has been made in view of the above circumstances, and an object of the present invention is to provide a non-pneumatic tire through which fitting of an attachment body and an inner cylinder is made easier, ease of assembly is improved, and in which it is possible to reduce looseness occurring between the attachment body and the inner cylinder.

### [Solution to Problem]

According to an aspect of the present invention, there is provided a non-pneumatic tire which includes an attachment body that is attached to a vehicle axle, a ring member including an inner cylinder that is externally mounted on the attachment body and an outer cylinder that surrounds the inner cylinder from the outside in a tire radial direction, and a plurality of connecting members that are arranged between the inner cylinder and the outer cylinder in a tire circumferential direction and connect the cylinders to each other in a freely displaceable manner, wherein, between an outer circumferential surface of the attachment body and an inner circumferential surface of the inner cylinder, a pressing member that presses the attachment body and the inner cylinder in a direction in which they are separated from each other in the tire radial direction is provided.

### [Advantageous Effects of Invention]

According to the non-pneumatic tire of the present invention, fitting of the attachment body and the inner cylinder is made easier, ease of assembly is improved, and it is possible to reduce looseness occurring between the attachment body 11 and the inner cylinder 12.

### [Brief Description of Drawings]

Fig. 1 is a tire side view of a non-pneumatic tire according to an embodiment of the present invention when viewed from one side in a tire width direction.
Fig. 2 is a view in which a part A in Fig. 1 is enlarged.
Fig. 3 is a cross-sectional view taken along the line B-B in Fig. 2.
Fig. 4 shows a modified example of the non-pneumatic tire according to the embodiment of the present invention and is an enlarged view corresponding to Fig. 2.
Fig. 5 is a cross-sectional view taken along the line C-C in Fig. 4.
Fig. 6 shows a modified example of the non-pneumatic tire according to the embodiment of the present invention and is an enlarged view corresponding to Fig. 3 and Fig. 5.

### [Description of Embodiments]

An embodiment according to the present invention will be described below with reference to the drawings.

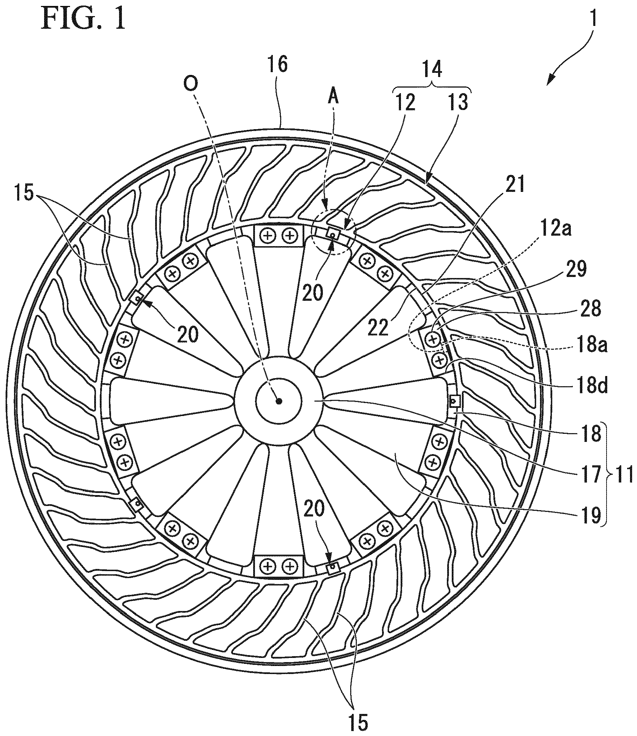

As shown in Fig. 1, a non-pneumatic tire 1 of the present embodiment includes an attachment body 11 attached to a vehicle axle (not shown), a ring member 14 including an inner cylinder 12 that is externally mounted on the attachment body 11 and an outer cylinder 13 that surrounds the inner cylinder 12 from the outside in a tire radial direction, a plurality of connecting members 15 that are arranged between the inner cylinder 12 and the outer cylinder 13 in a tire circumferential direction and connect both the cylinders 12 and 13 relatively elastically in a freely displaceable manner, and a cylindrical tread member 16 that is externally mounted on the outer cylinder 13.

Here, the non-pneumatic tire 1 of the present embodiment may be applied to small-sized vehicles that travel at a low speed such as handle-type electric wheelchairs defined in, for example, Japanese Industrial Standard JIS T 9208. In addition, the size of the non-pneumatic tire 1 is not particularly limited, but it may be, for example, 3.00-8. In addition, the non-pneumatic tire 1 may be applied to a passenger car. In this case, the size is not particularly limited, but it may be, for example, 155/65R13.

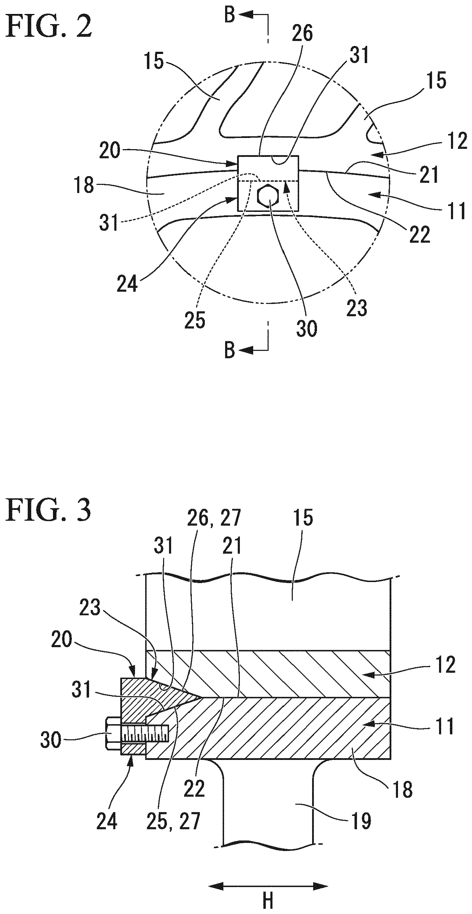

The attachment body 11, the inner cylinder 12, the outer cylinder 13 and the tread member 16 described above are arranged coaxially with a common axis. Hereinafter, the common axis will be referred to as an axis O and a direction along the axis O will be referred to as a tire width direction H (refer to Fig. 3). In addition, in a tire side view when viewed in a tire width direction H (refer to Fig. 1), a direction orthogonal to the axis O will be referred to as a tire radial direction and a circumferential direction around the axis O will be referred to as a tire circumferential direction. Here, the attachment body 11, the inner cylinder 12, the outer cylinder 13 and the tread member 16 are arranged in a state in which central parts in the tire width direction H coincide with each other.

In Fig. 1, the attachment body 11 includes a mounting cylinder part 17 on which a tip of a vehicle axle is mounted, an outer ring part 18 that surrounds the mounting cylinder part 17 from the outer side in the tire radial direction, and a plurality of ribs 19 that connect the mounting cylinder part 17 to the outer ring part 18.

The mounting cylinder part 17, the outer ring part 18 and the ribs 19 are integrally formed of a metal material, for example, an aluminum alloy. The mounting cylinder part 17 and the outer ring part 18 are formed in a cylindrical shape and arranged coaxially with the axis O. For example, the plurality of ribs 19 are disposed at uniform intervals in the tire circumferential direction.

On an outer circumferential surface 21 of the outer ring part 18, a plurality of key grooves 18a that are depressed inward in the tire radial direction and extend in the tire width direction H are formed at intervals in the tire circumferential direction. Here, in Fig. 1, only one of these key grooves 18a is shown and the other key grooves are not shown. On the outer circumferential surface 21 of the outer ring part 18, only one side (for example, the outside of a vehicle body) in the tire width direction H of the key groove 18a is open and the other side (for example, the inside of a vehicle body) in the tire width direction H is closed.

Although not specifically shown, in the outer ring part 18, at a part positioned between the adjacent key grooves 18a in the tire circumferential direction, a plurality of lightening holes that penetrate the outer ring part 18 in the tire radial direction are formed at intervals in the tire width direction H. In addition, a plurality of hole arrays including these plurality of lightening holes may be formed at intervals in the tire circumferential direction. Similarly, in the ribs 19, lightening holes that penetrate the ribs 19 in the tire width direction H may be formed. When such lightening holes are formed, it is possible to secure the strength of the attachment body 11 and reduce the weight thereof.

On one side edge of the outer ring part 18 in the tire width direction H, at a position corresponding to the key groove 18a, a concave part 18d into which a plate component 28 in which through-holes are formed is fitted is formed. The concave part 18d is recessed toward the other side in the tire width direction H. In addition, on a wall surface that faces one side in the tire width direction H among wall surfaces that define the concave part 18d, a female screw that communicates with the through-hole of the plate component 28 fitted into the concave part 18d is formed.

Here, a plurality of through-holes are formed in the plate component 28 at intervals in the tire circumferential direction. Similarly, a plurality of female screws are formed on the wall surface of the concave part 18d at intervals in the tire circumferential direction. Thus, a male screw of a bolt 29 is inserted into the through-hole and screwed into the female screw. While a case in which two through-holes are provided in the plate component 28 and two female screws are provided in the concave part 18d has been exemplified in the shown example, the numbers thereof are not limited to two.

The inner cylinder 12 of the ring member 14 is externally fitted to the attachment body 11. The inner cylinder 12 has a cylindrical shape. On an inner circumferential surface 22 of the inner cylinder 12, a projecting part 12a that protrudes inward in the tire radial direction and extends substantially across the entire length in the tire width direction H is formed. A plurality of projecting parts 12a are formed on the inner circumferential surface 22 of the inner cylinder 12 at uniform intervals in the tire circumferential direction and fitted to the key grooves 18a formed on the outer circumferential surface 21 of the attachment body 11.

While the projecting part 12a is fitted into the key groove 18a, when the bolt 29 is screwed to the female screw through the through-hole of the plate component 28 fitted to the concave part 18d, the inner cylinder 12 in Fig. 1 is mounted on the attachment body 11. In this state, the projecting part 12a is interposed between the plate component 28 and the other end wall surface that is positioned at the other end in the tire width direction H and faces one side among wall surfaces that define the key groove 18a in the tire width direction H. In such a configuration, a relative movement of the attachment body 11 and the inner cylinder 12 in the tire width direction H is restricted.

Here, among wall surfaces that define the key groove 18a, a pair of side wall surfaces that face each other in the tire circumferential direction and a bottom wall surface that faces the outside in the tire radial direction are formed to be perpendicular to each other. In addition, similarly, among outer surfaces of the projecting part 12a, a pair of side wall surfaces that rise from the inner circumferential surface 22 of the inner cylinder 12 and a top wall surface that faces inward in the tire radial direction are formed to be perpendicular to each other. Thus, the sizes of the projecting part 12a and the key groove 18a in the tire circumferential direction are equal to each other. That is, the projecting part 12a is fitted into the key groove 18a with less play in the tire circumferential direction. In such a configuration, a relative movement of the attachment body 11 and the inner cylinder 12 in the tire circumferential direction is restricted.

Then, as shown in Fig. 2 and Fig. 3, a pressing member 20 that presses the attachment body 11 and the inner cylinder 12 in a direction in which they are separated in the tire radial direction is provided between the outer circumferential surface 21 of the attachment body 11 and the inner circumferential surface 22 of the inner cylinder 12. In the present embodiment, the pressing member 20 is inserted between the attachment body 11 and the inner cylinder 12 by press fitting. For example, the pressing member 20 is formed of a harder material than the inner cylinder 12 or is formed of a material having the same hardness as the inner cylinder 12.

As shown in Fig. 1, a plurality of pressing members 20 are provided between the attachment body 11 and the inner cylinder 12 at uniform intervals in the tire circumferential direction. In the present embodiment, three or more pressing members 20 are disposed between the outer circumferential surface 21 of the outer ring part 18 of the attachment body 11 and the inner circumferential surface 22 of the inner cylinder 12 at uniform intervals in the tire circumferential direction, and specifically, five pressing members 20 are provided.

Here, while an example in which the pressing member 20 is inserted between the attachment body 11 and the inner cylinder 12 from one side end in the tire width direction H toward the other side in the tire width direction H has been exemplified in the present embodiment, the present invention is not limited thereto. That is, the pressing member 20 may be inserted between the attachment body 11 and the inner cylinder 12 from the other side end in the tire width direction H toward one side in the tire width direction H.

In addition, the pressing member 20 may be provided at both ends in the tire width direction H between the attachment body 11 and the inner cylinder 12. In this case, positions in the tire circumferential direction of the pressing member 20 provided at one side end in the tire width direction H and the pressing member 20 provided at the other side end in the tire width direction H may coincide with each other or may be different from each other. Here, when positions in the tire circumferential direction of the pressing member 20 provided at one end in the tire width direction H and the pressing member 20 provided at the other end of the tire width direction H are different from each other, the pressing members 20 provided at one end in the tire width direction H and the pressing members 20 provided at the other end in the tire width direction H are preferably arranged at uniform intervals in the tire circumferential direction.

As shown in Fig. 2 and Fig. 3, the pressing member 20 includes a pressing main body 23 disposed between the outer circumferential surface 21 of the attachment body 11 and the inner circumferential surface 22 of the inner cylinder 12 and an attachment piece 24 that is connected to the pressing main body 23 and attached to at least one of the attachment body 11 and the inner cylinder 12.

The pressing main body 23 has a rectangular shape when viewed in the tire width direction H as shown in Fig. 2 and a shape (not shown) when viewed in the tire radial direction also is a rectangular shape. In addition, the pressing main body 23 has a triangular shape that is sharp to the inside from the outside in the tire width direction H in a cross-sectional view perpendicular to the tire circumferential direction as shown in Fig. 3 (in a cross-sectional view in the tire radial direction and the tire width direction H). That is, in the example in the present embodiment, the pressing main body 23 has a triangular prismatic shape.

The pressing main body 23 includes an inner pressing surface 25 that presses the outer circumferential surface 21 of the attachment body 11 and an outer pressing surface 26 that presses the inner circumferential surface 22 of the inner cylinder 12. Thus, in at least one of the inner pressing surface 25 and the outer pressing surface 26, a tapered part 27 that is inclined in the tire radial direction so that the size of the pressing main body 23 in the tire radial direction increases (that is, the thickness of the pressing main body 23 in the tire radial direction increases) from the inside to the outside in the tire width direction H is formed.

In the example shown in the present embodiment, the inner pressing surface 25 and the outer pressing surface 26 each have a planar shape. Thus, the tapered part 27 is formed on both the inner pressing surface 25 and the outer pressing surface 26. Specifically, on the inner pressing surface 25, the tapered part 27 that is gradually inclined inward in the tire radial direction from the inside to the outside in the tire width direction H is formed. In addition, on the outer pressing surface 26, the tapered part 27 that is gradually inclined outward in the tire radial direction from the inside to the outside in the tire width direction H is formed. Here, in the example of the present embodiment, the entire surface of the inner pressing surface 25 forms the tapered part 27 and the entire surface of the outer pressing surface 26 forms the tapered part 27.

However, the present invention is not limited thereto. The tapered part 27 may be formed on only one of the inner pressing surface 25 and the outer pressing surface 26. In addition, at least part of the inner pressing surface 25 and the outer pressing surface 26 may form the tapered part 27. When at least part of the inner pressing surface 25 and the outer pressing surface 26 forms the tapered part 27, the tapered part 27 is preferably disposed at the inner end of the pressing main body 23 in the tire width direction H.

As shown in Fig. 2 and Fig. 3, in the example of the present embodiment, the attachment piece 24 forms a rectangular plate shape. In addition, an outer part positioned outward in the tire radial direction within the attachment piece 24 is positioned outward in the tire width direction H of the pressing main body 23 and is connected to the pressing main body 23. An inner part positioned inward in the tire radial direction within the attachment piece 24 is in contact with an end that faces the outside of the outer ring part 18 of the attachment body 11 in the tire width direction H.

In an inner part of the attachment piece 24 in the tire radial direction, a through-hole that penetrates the attachment piece 24 in the thickness direction (the tire width direction H) is formed. A female screw is formed at a part that faces the through-hole of the attachment piece 24 within an end that faces outward in the tire width direction H of the outer ring part 18, and the through-hole and the female screw communicate with each other.

Further, a screw member 30 is provided as an example of a fixing unit for fixing the pressing member 20 to the attachment body 11 or the inner cylinder 12. In the present embodiment, the screw member 30 fixes the pressing member 20 to the attachment body 11 between the attachment body 11 and the inner cylinder 12.

The screw member 30 includes a screw shaft having a male screw and a screw head that is formed to have a larger diameter than the screw shaft. The screw shaft is inserted into the through-hole of the attachment piece 24 and is screwed to the female screw of the outer ring part 18. The screw head is formed to have a larger diameter than the through-hole of the attachment piece 24 and is in contact with an end that faces the side opposite to the outer ring part 18 in the attachment piece 24 (end that faces outward in the tire width direction H).

As shown in Fig. 3, a groove 31 that extends in a direction crossing the tire circumferential direction is formed on at least one of the outer circumferential surface 21 of the attachment body 11 and the inner circumferential surface 22 of the inner cylinder 12, and the pressing member 20 is disposed in the groove 31. In the present embodiment, the groove 31 that extends in a direction crossing the tire circumferential direction is formed on both the outer circumferential surface 21 of the attachment body 11 and the inner circumferential surface 22 of the inner cylinder 12, and the pressing main body 23 of the pressing member 20 is inserted into these grooves 31.

In addition, in the example of the present embodiment, the groove 31 extends in the tire width direction H (parallel to the axis O) in a direction crossing the tire circumferential direction.

Positions in the tire circumferential direction of the grooves 31 of the outer circumferential surface 21 of the attachment body 11 and the groove 31 of the inner circumferential surface 22 of the inner cylinder 12 coincide with each other and are disposed to face each other in the tire radial direction. In addition, a plurality of pairs (sets) of grooves 31 that are disposed to face each other in the tire radial direction are provided at uniform intervals in the tire circumferential direction according to the position at which the above pressing member 20 is disposed.

At least one of the two ends of the groove 31 in the extension direction opens to an end that faces in the tire width direction H in the attachment body 11 and the inner cylinder 12. In the example shown in the present embodiment, one side end (one end) of the groove 31 in the tire width direction H opens to an end that faces one side of the attachment body 11 and the inner cylinder 12 in the tire width direction H. In addition, the other side end (the other end) of the groove 31 in the tire width direction H is closed without reaching an end that faces the other side of the attachment body 11 and the inner cylinder 12 in the tire width direction H.

However, the present invention is not limited thereto. The other side end (the other end) of the groove 31 in the tire width direction H may open to an end that faces the other side of the attachment body 11 and the inner cylinder 12 in the tire width direction H and one side end (one end) of the groove 31 in the tire width direction H may be closed without reaching an end that faces one side of the attachment body 11 and the inner cylinder 12 in the tire width direction H. In addition, the groove 31 may open to both ends that face the attachment body 11 and the inner cylinder 12 in the tire width direction H.

As shown in Fig. 3, regarding the size, the length of the groove 31 in the tire width direction H is equal to or greater than (that is, the same as or larger than) the length of the pressing main body 23 of the pressing member 20 in the tire width direction H. Therefore, the pressing main body 23 of the pressing member 20 is accommodated in the groove 31 in the tire width direction H.

In addition, the groove 31 formed on the outer circumferential surface 21 of the attachment body 11 has a shape that is recessed inward in the tire radial direction according to the shape of the inner part of the pressing main body 23 which is positioned inward in the tire radial direction. That is, the groove 31 is formed in a concave shape in which the inner part of the pressing main body 23 in the tire radial direction can be received.

Specifically, the groove 31 of the outer circumferential surface 21 includes a bottom surface which is a pressed surface that is pressed against the inner pressing surface 25 of the pressing main body 23 and a pair of side surfaces that rise outward in the tire radial direction from both ends of the bottom surface in the tire circumferential direction. In a cross-sectional view perpendicular to the tire circumferential direction shown in Fig. 3, according to the entire surface of the inner pressing surface 25 that forms the tapered part 27, the bottom surface of the groove 31 of the outer circumferential surface 21 is formed in a tapered shape that is gradually inclined inward in the tire radial direction from the inside to the outside in the tire width direction H. In addition, the bottom surface of the groove 31 has a planar shape according to the inner pressing surface 25 that is formed in a planar shape.

Regarding the size, a distance (that is, a groove width) between a pair of side surfaces in the groove 31 of the outer circumferential surface 21 is equal to or greater than (that is, the same as or larger than) the width of the pressing main body 23 in the tire circumferential direction. In the example of the present embodiment, as shown in Fig. 2, an inner part of the pressing main body 23 in the tire radial direction is fitted between a pair of side surfaces in the groove 31 of the outer circumferential surface 21.

In addition, the groove 31 formed on the inner circumferential surface 22 of the inner cylinder 12 has a shape that is recessed outward in the tire radial direction according to the shape of the outer part of the pressing main body 23 positioned outward in the tire radial direction. That is, the groove 31 is formed in a concave shape in which the outer part of the pressing main body 23 in the tire radial direction can be received.

Specifically, the groove 31 of the inner circumferential surface 22 includes a bottom surface which is a pressed surface that is pressed against the outer pressing surface 26 of the pressing main body 23 and a pair of side surfaces that rise inward in the tire radial direction from both ends of the bottom surface in the tire circumferential direction. In a cross-sectional view perpendicular to the tire circumferential direction shown in Fig. 3, the bottom surface of the groove 31 of the inner circumferential surface 22 is formed in a tapered shape that is gradually inclined outward in the tire radial direction from the inside to the outside in the tire width direction H according to the entire surface of the outer pressing surface 26 that forms the tapered part 27. In addition, the bottom surface of the groove 31 has a planar shape according to the outer pressing surface 26 that is formed in a planar shape.

Regarding the size, a distance (that is, a groove width) between a pair of side surfaces in the groove 31 of the inner circumferential surface 22 is equal to or greater than (that is, the same as or larger than) the width of the pressing main body 23 in the tire circumferential direction. In the example of the present embodiment, as shown in Fig. 2, the outer part of the pressing main body 23 in the tire radial direction is fitted between a pair of side surfaces in the groove 31 of the inner circumferential surface 22.

As shown in Fig. 1, the outer cylinder 13 of the ring member 14 has a cylindrical shape with a larger diameter than the inner cylinder 12 and is disposed away from the inner cylinder 12 and outward in the tire radial direction and surrounds the entire inner cylinder 12 in the tire circumferential direction from the outside in the tire radial direction.

Although not specifically shown, the outer cylinder 13 has a larger size in the tire width direction H, that is, has a larger width, than the inner cylinder 12. However, the size of the outer cylinder 13 in the tire width direction H may be equal to the size of the inner cylinder 12 in the tire width direction H.

The connecting member 15 connects the outer circumferential surface of the inner cylinder 12 in the ring member 14 to the inner circumferential surface of the outer cylinder 13 relatively elastically in a freely displaceable manner. In the example of the present embodiment, a plurality of connecting members 15 made of an elastically deformable plate component are provided at uniform intervals in the tire circumferential direction. In the shown example, the number of connecting members 15 is 40.

The plurality of connecting members 15 are disposed at positions at which they are rotationally symmetric with respect to the axis O between the inner cylinder 12 and the outer cylinder 13. Thus, the connecting members 15 that are adjacent to each other in the tire circumferential direction are not in contact with each other. In addition, the plurality of connecting members 15 have the same width in the tire width direction H, the same thickness of a cross section perpendicular to the connecting member 15 in the extension direction and have the same length in the extension direction.

One end (outer end) of the connecting member 15 which is connected to the outer cylinder 13 is positioned on one side (in the example shown in Fig. 1, a clockwise direction therefrom around the axis O) in the tire circumferential direction relative to the other end (inner end) connected to the inner cylinder 12. That is, the connecting member 15 gradually extends from one end connected to the outer cylinder 13 to the other side (counterclockwise direction around the axis O in Fig. 1) in the tire circumferential direction and inward in the tire radial direction and the other end is connected to the inner cylinder 12.

In an intermediate part of the connecting member 15 positioned between the one end and the other end, a curved part that is curved in the tire circumferential direction is formed. In the shown example, the curved part is curved so that it is convex toward the other side in the tire circumferential direction.

The inner cylinder 12, the outer cylinder 13, and the plurality of connecting members 15 are integrally formed of a synthetic resin material by injection molding. That is, the ring member 14 and the plurality of connecting members 15 are an integral component formed by injection molding. Here, the injection molding may be a method of molding all of the inner cylinder 12, the outer cylinder 13 and the plurality of connecting members 15 at the same time or may be insert molding in which part or all of the outer cylinder 13 of the ring member 14 positioned on the side opposite to a gate of a molding die is used as an insert article and the remainder including the inner cylinder 12 and the plurality of connecting members 15 is injection-molded.

In addition, the synthetic resin material may be, for example, only one type of resin material, a mixture containing two or more types of resin materials, or a mixture containing at least one type of resin material and at least one type of elastomer and may further contain an additive, for example, an antioxidant, a plasticizer, a filler, or a pigment. The synthetic resin material is preferably a thermoplastic resin.

As shown in Fig. 1, the tread member 16 is formed in a cylindrical shape, and integrally covers the entire outer circumferential surface side of the outer cylinder 13. The tread member 16 is formed of, for example, vulcanized rubber in which natural rubber and/or a rubber component are vulcanized or a thermoplastic material.

Examples of the thermoplastic material include a thermoplastic elastomer and a thermoplastic resin. Examples of the thermoplastic elastomer include an amide type thermoplastic elastomer (TPA), an ester type thermoplastic elastomer (TPC), an olefin type thermoplastic elastomer (TPO), a styrene type thermoplastic elastomer (TPS), a urethane type thermoplastic elastomer (TPU), crosslinked thermoplastic rubber (TPV) and other thermoplastic elastomers (TPZ) defined in Japanese Industrial Standard JIS K6418.

Examples of the thermoplastic resin include a urethane resin, an olefin resin, a vinyl chloride resin, and a polyamide resin. Here, in consideration of wear resistance, the tread member 16 is preferably formed of vulcanized rubber.

According to the non-pneumatic tire 1 of the present embodiment described above, between the outer circumferential surface 21 of the attachment body 11 and the inner circumferential surface 22 of the inner cylinder 12, the pressing member 20 that presses them in a direction in which they are separated from each other in the tire radial direction is provided. Therefore, a movement of the attachment body 11 and the inner cylinder 12 in the tire radial direction is restricted. Therefore, it is possible to reduce looseness occurring between the attachment body 11 and the inner cylinder 12.

When looseness between the attachment body 11 and the inner cylinder 12 is reduced, it is possible to reduce wear of the member. As described in the present embodiment, compared to the attachment body 11 made of a metal material or the like, the inner cylinder 12 made of a resin material or the like has lower hardness, and when looseness occurs between these members, the inner cylinder 12 easily wears. However, according to the present embodiment, it is possible to significantly reduce wear of the inner cylinder 12.

In addition, when looseness between the attachment body 11 and the inner cylinder 12 is reduced, a vehicle on which the non-pneumatic tire 1 is mounted can maintain favorable running stability.

In addition, since looseness is reduced according to the provision of the pressing member 20, when no pressing member 20 is provided, it is possible to secure a large gap formed between the attachment body 11 and the inner cylinder 12. That is, when the non-pneumatic tire 1 is assembled, it is possible to secure a large clearance (clearance in the radial direction) provided for fitting the attachment body 11 and the inner cylinder 12. Therefore, since fitting of the attachment body 11 and the inner cylinder 12 can be made easier, the assembly operation can be simplified.

According to the present embodiment described above, fitting of the attachment body 11 and the inner cylinder 12 is made easier, ease of assembly is improved, and it is possible to reduce looseness occurring between the attachment body 11 and the inner cylinder 12.

In addition, in the present embodiment, since the pressing member 20 is disposed in the groove 31, the following operations and effects are obtained.

That is, in this case, when the non-pneumatic tire 1 is assembled, if the pressing member 20 is provided on the groove 31 formed between the attachment body 11 and the inner cylinder 12, it is possible to simplify an operation of identifying a position at which the pressing member 20 is disposed. In addition, when the pressing member 20 is inserted between the attachment body 11 and the inner cylinder 12, since the pressing member 20 is guided along the groove 31, the pressing member 20 is easily mounted.

In addition, as described in the present embodiment, when a plurality of grooves 31 and pressing members 20 are provided between the attachment body 11 and the inner cylinder 12 in the tire circumferential direction, it is easy to uniformly arrange the plurality of pressing members 20 in the tire circumferential direction and the rotational balance of the non-pneumatic tire 1 is favorably easily maintained.

In addition, as described in the present embodiment, when the groove 31 is provided on both the outer circumferential surface 21 of the attachment body 11 and the inner circumferential surface 22 of the inner cylinder 12, preferably, positions of the groove 31 of the attachment body 11 and the groove 31 of the inner cylinder 12 in the tire circumferential direction coincide with each other, and these grooves 31 are disposed to face each other in the tire radial direction.

Therefore, according to the pressing member 20 inserted into the groove 31, it is possible to restrict a relative movement of the attachment body 11 and the inner cylinder 12 in the tire circumferential direction, and these members can be brought into a rotation prevention state. That is, according to the pressing member 20, not only a relative movement of the attachment body 11 and the inner cylinder 12 in the tire radial direction can be restricted, but also a relative movement in the tire circumferential direction can be restricted. Therefore, in this case, it is possible to reduce the number of sets of or eliminate key grooves 18a and projecting parts 12a provided as a detent mechanism of the attachment body 11 and the inner cylinder 12.

In addition, in the present embodiment, the pressing member 20 includes the inner pressing surface 25 that presses the outer circumferential surface 21 of the attachment body 11 and the outer pressing surface 26 that presses the inner circumferential surface 22 of the inner cylinder 12. On at least one of the inner pressing surface 25 and the outer pressing surface 26, the tapered part 27 that is inclined in the tire radial direction so that the size of the pressing member 20 in the tire radial direction increases from the inside to the outside in the tire width direction H is formed. Therefore, the following operations and effects are obtained.

That is, in this case, when the pressing member 20 is inserted between the outer circumferential surface 21 of the attachment body 11 and the inner circumferential surface 22 of the inner cylinder 12, the tapered part 27 formed on at least one of the inner pressing surface 25 and the outer pressing surface 26 of the pressing member 20 gradually presses the attachment body 11 and the inner cylinder 12 in a direction in which they are separated in the tire radial direction and enters between these members.

That is, since the pressing member 20 can be smoothly inserted between the attachment body 11 and the inner cylinder 12 according to the tapered part 27, a mounting operation of the pressing member 20 can be simplified. In addition, accordingly, it is easy to press-fit the pressing member 20 between the attachment body 11 and the inner cylinder 12.

In addition, in the present embodiment, since the screw member 30 is provided as a fixing unit for fixing the pressing member 20 to the attachment body 11 or the inner cylinder 12, the following operations and effects are obtained.

That is, in this case, the pressing member 20 provided between the attachment body 11 and the inner cylinder 12 can be fixed by the screw member (fixing unit) 30. Therefore, operations and effects according to the pressing member 20 described above are successfully obtained consistently for a long time.

Here, the technical scope of the present invention is not limited to the above embodiment, and various modifications can be made without departing from the spirit and scope of the present invention.

For example, while a case in which the pressing member 20 includes the pressing main body 23 and the attachment piece 24 has been described in the above embodiment, the present invention is not limited thereto.

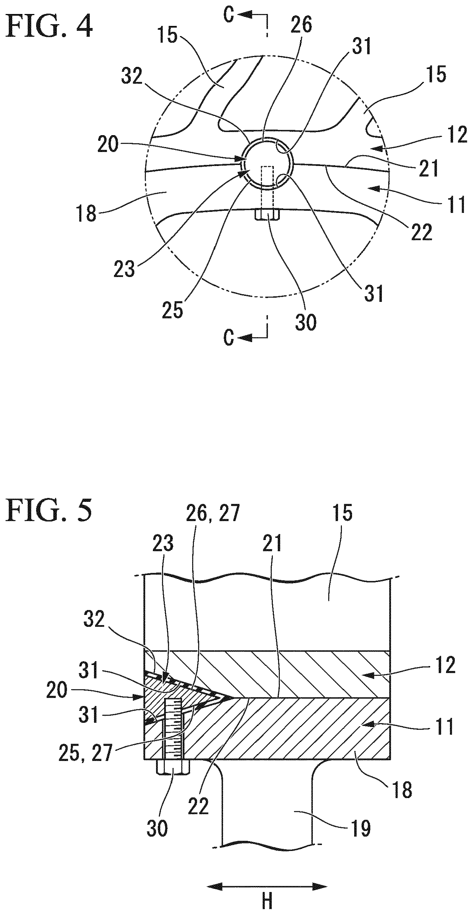

Fig. 4 to Fig. 6 show modified examples of the non-pneumatic tire 1 described in the above embodiment. In these modified examples, the pressing member 20 includes the pressing main body 23 inserted between the outer circumferential surface 21 of the attachment body 11 and the inner circumferential surface 22 of the inner cylinder 12, but does not include the attachment piece 24. Modified examples will be described below. Here, detailed descriptions of components the same as those in the above embodiment will be omitted and only differences will be mainly described.

In the modified example shown in Fig. 4 and Fig. 5, the pressing main body 23 of the pressing member 20 has a conical shape. Specifically, as shown in Fig. 4, when viewed in the tire width direction H, the pressing main body 23 has a circular shape. In addition, as shown in Fig. 5, in a cross-sectional view perpendicular to the tire circumferential direction, the pressing main body 23 has a triangular shape that is sharp to the inside from the outside in the tire width direction H. In addition, the shape of the pressing main body 23 when viewed in the tire radial direction (not shown) is a triangular shape that is sharp to the inside from the outside in the tire width direction H.

In this modified example, the inner pressing surface 25 and the outer pressing surface 26 each have a curved surface shape that is convex in the tire radial direction. Specifically, the inner pressing surface 25 and the outer pressing surface 26 each are formed in a shape in which the outer circumferential surface of the pressing main body 23 made of a cone is halved along the central axis of the cone, and the inner pressing surface 25 has a curved surface shape that is convex inward in the tire radial direction and the outer pressing surface 26 has a curved surface shape that is convex outward in the tire radial direction. Then, in this modified example also, the entire surface of the inner pressing surface 25 forms the tapered part 27 and the entire surface of the outer pressing surface 26 forms the tapered part 27.

In addition, a through-hole that penetrates the outer ring part 18 in the thickness direction (tire radial direction) is formed at an end of the outer ring part 18 of the attachment body 11 in the tire width direction H. In addition, a female screw is formed at part (a part of the inner pressing surface 25) of the outer circumferential surface of the pressing main body 23 that faces the through-hole of the outer ring part 18, and the through-hole and the female screw communicate with each other.

Then, a screw shaft of the screw member 30 is inserted into the through-hole of the outer ring part 18 and is screwed to the female screw of the pressing main body 23. A screw head of the screw member 30 is formed to have a larger diameter than the through-hole of the outer ring part 18 and is in contact with the inner circumferential surface of the outer ring part 18.

The groove 31 formed on the outer circumferential surface 21 of the attachment body 11 has a semicircular cross section perpendicular to the axis O. An inner surface of the groove 31 of the outer circumferential surface 21 has a concave curved surface shape according to the inner pressing surface 25 that is formed in a convex curved surface shape. In addition, the groove 31 formed on the inner circumferential surface 22 of the inner cylinder 12 has a semicircular cross section perpendicular to the axis O. An inner surface of the groove 31 of the inner circumferential surface 22 has a concave curved surface shape according to the outer pressing surface 26 that is formed in a convex curved surface shape.

Specifically, the groove 31 of the outer circumferential surface 21 and the groove 31 of the inner circumferential surface 22 each are formed in a shape in which the inner circumferential surface of a conical hole is halved along the central axis of the conical hole. The groove 31 of the outer circumferential surface 21 has a curved surface shape that is concave inward in the tire radial direction, and the groove 31 of the inner circumferential surface 22 has a curved surface shape that is concave outward in the tire radial direction.

Then, in this modified example, a cushioning member 32 is provided at at least one of a position between the attachment body 11 and the pressing member 20, and a position between the inner cylinder 12 and the pressing member 20. In the shown example, the cushioning member 32 has a conical tubular shape and is provided both between the attachment body 11 and the pressing member 20 and between the inner cylinder 12 and the pressing member 20. In addition, an elastomer is used as the cushioning member 32.

According to this modified example, when the cushioning member 32 is provided, it is possible to prevent wear between the attachment body 11 and the pressing member 20 and wear between the inner cylinder 12 and the pressing member 20. In addition, according to the cushioning member 32, it is possible to reduce a sliding movement of the pressing member 20 provided between the attachment body 11 and the inner cylinder 12 and it is possible to prevent the pressing member 20 from escaping.

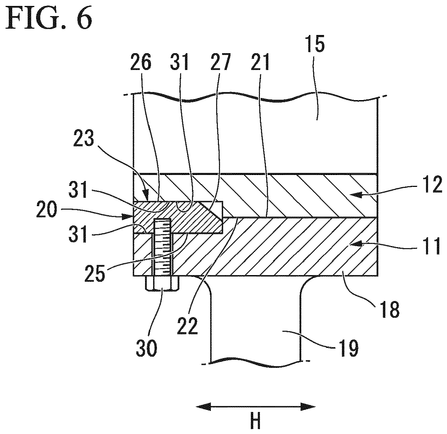

In addition, in the modified example shown in Fig. 6, the pressing main body 23 of the pressing member 20 has, for example, a polygonal columnar shape such as a rectangular parallelepiped or a cylindrical shape that extends in the tire width direction H. In a cross-sectional view perpendicular to the tire circumferential direction shown in Fig. 6, the inner pressing surface 25 of the pressing member 20 extends in the tire width direction H (parallel to the axis O) and the outer pressing surface 26 also extends in the tire width direction H. In addition, accordingly, in a cross-sectional view shown in Fig. 6, the groove 31 of the outer circumferential surface 21 of the attachment body 11 extends in the tire width direction H and the groove 31 of the inner circumferential surface 22 of the inner cylinder 12 also extends in the tire width direction H.

Then, in this modified example, only on at least one of the inner pressing surface 25 and the outer pressing surface 26 of the pressing member 20, the tapered part 27 that is inclined in the tire radial direction so that the size of the pressing member 20 in the tire radial direction increases from the inside to the outside in the tire width direction H is formed. In the shown example, only the outer pressing surface 26 between the inner pressing surface 25 and the outer pressing surface 26 forms the tapered part 27, and the tapered part 27 is formed at an inner end of the outer pressing surface 26 in the tire width direction H. According to the tapered part 27 of this modified example, the pressing member 20 also can be smoothly inserted between the attachment body 11 and the inner cylinder 12.

In addition, in the pressing member 20 shown in Fig. 6, it may not be necessary to form the tapered part 27 at all.

However, in this case, chamfering is preferably performed on at least one of an opening that is positioned at an end of the groove 31 of the outer circumferential surface 21 of the attachment body 11 in the tire width direction H and an opening that is positioned at an end of the groove 31 of the inner circumferential surface 22 of the inner cylinder 12 in the tire width direction H.

According to this configuration, the pressing member 20 can also be smoothly inserted between the attachment body 11 and the inner cylinder 12.

In addition, while the groove 31 extends in the tire width direction H (parallel to the axis O) in a direction crossing the tire circumferential direction in the above embodiment, the present invention is not limited thereto. That is, the groove 31 may be gradually twisted in the tire circumferential direction toward the tire width direction H and extend in a spiral shape. In this case, the pressing member 20 inserted into the groove 31 also has a spiral shape, and the pressing member 20 can press the attachment body 11 and the inner cylinder 12 in a direction in which they are separated in the tire radial direction over a wide range in the tire circumferential direction.

In addition, while the pressing member 20 is inserted into the groove 31 in the above embodiment, the pressing member 20 may be inserted between the outer circumferential surface 21 of the attachment body 11 and the inner circumferential surface 22 of the inner cylinder 12 without providing such grooves 31.

In addition, the shape of the pressing member 20 is not limited to a polygonal columnar shape such as a triangular prismatic shape and a rectangular parallelepiped, a conical shape, and a cylindrical shape described in the above embodiment, and other shapes, for example, a plate shape, may be used.

In addition, while the plurality of pressing members 20 are provided between the attachment body 11 and the inner cylinder 12 at uniform intervals in the tire circumferential direction in the above embodiment, the present invention is not limited thereto. That is, only one pressing member 20 may be provided. However, as described in the above embodiment, when a plurality of pressing members 20 are provided between the attachment body 11 and the inner cylinder 12 at a uniform pitch in the tire circumferential direction, this is preferable because the rotational balance of the non-pneumatic tire 1 is easily obtained.

In addition, while the screw member 30 is provided as a fixing unit for fixing the pressing member 20 in the above embodiment, the pressing member 20 may be fixed using other fixing units. As the fixing unit, for example, an escape prevention mechanism for pressing the pressing member 20 to the inside from the outside in the tire width direction H and an adhesive can be used.

In addition, the number of connecting members 15 is not limited to 40, which is described in the above embodiment, but may be another number, for example, 60. The number of connecting members 15 is appropriately increased or decreased according to, for example, the diameter of the tire.

In addition, a plurality of integral components formed by injection molding the ring member 14 and the plurality of connecting members 15 described in the above embodiment may be connected by welding or the like in the tire width direction H. In this case, the connecting members 15 adjacent to each other in the tire width direction H may have different inclinations in the tire circumferential direction.

In addition, elements (components) of the above embodiment, the modified examples and explained in additional description may be combined, and additions, omissions, substitutions, and other modifications of elements can be made without departing from the spirit and scope of the present invention. In addition, the present invention is not limited by the above embodiment, and is limited only by the appended claims.

According to the non-pneumatic tire of the present invention, between the outer circumferential surface of the attachment body and the inner circumferential surface of the inner cylinder, a pressing member that presses them in a direction in which they are separated from each other in the tire radial direction is provided. Therefore, a movement of the attachment body and the inner cylinder in the tire radial direction is restricted. Therefore, it is possible to reduce looseness occurring between the attachment body and the inner cylinder.

When looseness between the attachment body and the inner cylinder is reduced, it is possible to reduce wear of the member. Generally, compared to the attachment body made of a metal material or the like, the inner cylinder made of a resin material or the like has lower hardness, and when looseness occurs between these members, the inner cylinder easily wears. However, according to the present invention, it is possible to significantly reduce wear of the inner cylinder.

In addition, when looseness between the attachment body and the inner cylinder is reduced, a vehicle on which the non-pneumatic tire is mounted can maintain favorable running stability.

In addition, since looseness is reduced according to the provision of the pressing member, when no pressing member is provided, it is possible to secure a large gap formed between the attachment body and the inner cylinder. That is, when the non-pneumatic tire is assembled, it is possible to secure a large clearance (clearance in the radial direction) provided for fitting the attachment body and the inner cylinder. Therefore, since fitting of the attachment body and the inner cylinder can be made easier, the assembly operation can be simplified.

According to the present embodiment described above, fitting of the attachment body and the inner cylinder is made easier, ease of assembly is improved, and it is possible to reduce looseness occurring between the attachment body 11 and the inner cylinder 12.

In addition, in the non-pneumatic tire, since a groove that extends in the direction crossing the tire circumferential direction is formed on at least one of the outer circumferential surface of the attachment body and the inner circumferential surface of the inner cylinder, the pressing member is preferably disposed on the groove.

In this case, when the non-pneumatic tire is assembled, if the pressing member is provided on the groove formed between the attachment body and the inner cylinder, it is possible to simplify an operation of identifying a position at which the pressing member is disposed. In addition, when the pressing member is inserted between the attachment body and the inner cylinder, since the pressing member is guided along the groove, the pressing member is easily mounted.

In addition, when a plurality of grooves and pressing members are provided between the attachment body and the inner cylinder in the tire circumferential direction, it is easy to uniformly arrange the plurality of pressing members in the tire circumferential direction and the rotational balance of the non-pneumatic tire is favorably easily maintained.

In addition, when the groove is provided on both the outer circumferential surface of the attachment body and the inner circumferential surface of the inner cylinder, preferably, positions of the groove of the attachment body and the groove of the inner cylinder in the tire circumferential direction coincide with each other, and these grooves are disposed to face each other in the tire radial direction.

In this case, according to the pressing member inserted into the groove, it is possible to restrict a relative movement of the attachment body and the inner cylinder in the tire circumferential direction, and these members can be brought into a rotation prevention state. That is, according to the pressing member, not only can a relative movement of the attachment body and the inner cylinder in the tire radial direction be restricted, but also a relative movement in the tire circumferential direction can be restricted.

In addition, in the non-pneumatic tire, the pressing member includes the inner pressing surface that presses the outer circumferential surface of the attachment body and the outer pressing surface that presses the inner circumferential surface of the inner cylinder. On at least one of the inner pressing surface and the outer pressing surface, preferably, the tapered part that is inclined in the tire radial direction so that the size of the pressing member in the tire radial direction increases from the inside to the outside in the tire width direction is formed.

In this case, when the pressing member is inserted between the outer circumferential surface of the attachment body and the inner circumferential surface of the inner cylinder, the tapered part formed on at least one of the inner pressing surface and the outer pressing surface of the pressing member gradually presses the attachment body and the inner cylinder in a direction in which they are separated in the tire radial direction and enters between these members.

That is, since the pressing member can be smoothly inserted between the attachment body and the inner cylinder according to the tapered part, a mounting operation of the pressing member can be simplified. In addition, accordingly, it is easy to press-fit the pressing member between the attachment body and the inner cylinder.

In addition, in the non-pneumatic tire, a fixing unit for fixing the pressing member is preferably provided on the attachment body or the inner cylinder.

In this case, the pressing member provided between the attachment body and the inner cylinder can be fixed by the fixing unit. Therefore, operations and effects according to the pressing member described above are successfully obtained consistently for a long time.

In addition, in the non-pneumatic tire, a cushioning member is preferably provided at at least one of a position between the attachment body and the pressing member and a position between the inner cylinder and the pressing member.

In this case, when the cushioning member is provided, it is possible to prevent wear between the attachment body and the pressing member and wear between the inner cylinder and the pressing member. Here, as the cushioning member, for example, an elastomer can be used.

In addition, according to the cushioning member, it is possible to reduce a sliding movement of the pressing member provided between the attachment body and the inner cylinder and it is possible to prevent the pressing member from escaping.

### [Industrial Applicability]

According to the present invention, fitting of the attachment body and the inner cylinder is made easier, ease of assembly is improved, and it is possible to reduce looseness occurring between the attachment body and the inner cylinder.

### [Reference Signs List]

1 Non-pneumatic tire
11 Attachment body
12 Inner cylinder
13 Outer cylinder
14 Ring member
15 Connecting member
20 Pressing member
21 Outer circumferential surface
22 Inner circumferential surface
25 Inner pressing surface
26 Outer pressing surface
27 Tapered part
30 Screw member (fixing unit)
31 Groove
32 Cushioning member
H Tire width direction

## Claims

1. A non-pneumatic tire comprising:
an attachment body that is attached to a vehicle axle;
a ring member including an inner cylinder that is externally mounted on the attachment body and an outer cylinder that surrounds the inner cylinder from the outside in a tire radial direction; and
a plurality of connecting members that are arranged between the inner cylinder and the outer cylinder in a tire circumferential direction and connect the cylinders to each other in a freely displaceable manner,
wherein, between an outer circumferential surface of the attachment body and an inner circumferential surface of the inner cylinder, a pressing member that presses the attachment body and the inner cylinder in a direction in which they are separated from each other in the tire radial direction is provided.

2. The non-pneumatic tire according to claim 1,
wherein a groove that extends in a direction crossing the tire circumferential direction is formed on at least one of the outer circumferential surface of the attachment body and the inner circumferential surface of the inner cylinder, and
wherein the pressing member is disposed on the groove.

3. The non-pneumatic tire according to claim 1 or 2,
wherein the pressing member includes:
an inner pressing surface that presses the outer circumferential surface of the attachment body, and
an outer pressing surface that presses the inner circumferential surface of the inner cylinder, and
wherein, on at least one of the inner pressing surface and the outer pressing surface, a tapered part that is inclined in the tire radial direction so that the size of the pressing member in the tire radial direction increases from the inside to the outside in a tire width direction is formed.

4. The non-pneumatic tire according to any one of claims 1 to 3,
wherein a fixing unit for fixing the pressing member is provided on the attachment body or the inner cylinder.

5. The non-pneumatic tire according to any one of claims 1 to 4,
wherein a cushioning member is provided at at least one of a position between the attachment body and the pressing member and a position between the inner cylinder and the pressing member.
